# EUROPÄISCHE PATENTSCHRIFT

(11) **EP 3 705 696 B1**
(45) Veröffentlichungstag und Bekanntmachung des Hinweises auf die Patenterteilung: **04.05.2022**
(21) Anmeldenummer: 20160373.5
(22) Anmeldetag: 02.03.2020
(51) Int. Cl.: F02B 37/18, F02M 26/26, F02M 26/70, F02M 26/71, F02M 26/72, F16K 1/22, F16K 1/226, F16K 11/052

(54) **KLAPPENVORRICHTUNG FÜR EINE VERBRENNUNGSKRAFTMASCHINE**
FLAP DEVICE FOR AN INTERNAL COMBUSTION ENGINE
DISPOSITIF À CLAPET POUR UN MOTEUR À COMBUSTION INTERNE

(30) Priorität: 08.03.2019 DE 102019105932
(43) Veröffentlichungstag der Anmeldung: 09.09.2020
(73) Patentinhaber: Pierburg GmbH, 41460 Neuss (DE)
(72) Erfinder: VIERKOTTEN, Dirk, 41460 Neuss (DE); DR. PAFFRATH, Holger, 41460 Neuss (DE); SUTTY, Patrick, 41460 Neuss (DE); REIMERS, Thorsten, 41460 Neuss (DE)
(74) Vertreter: terpatent Patentanwälte ter Smitten Eberlein-Van Hoof Rütten Daubert

(56) Entgegenhaltungen:
- EP-A2- 1 262 646
- EP-A2- 1 443 191
- WO-A1-2017/174121
- DE-A1- 3 700 219
- DE-A1-102005 012 842
- DE-A1-102008 048 912
- DE-A1-102013 111 215
- DE-B3-102011 106 744
- DE-U1- 7 716 337
- US-A1- 2001 047 834

## Beschreibung

Die Erfindung betrifft eine Klappenvorrichtung für eine Verbrennungskraftmaschine mit einem Klappengehäuse, in dem ein Einlass und zwei Auslässe ausgebildet sind, und einem Klappenkörper, der zwei Klappenhälften aufweist und der auf einer Welle angeordnet ist, die drehbar im Klappengehäuse gelagert ist und von der aus sich beidseits die beiden Klappenhälften erstrecken, wobei im Klappengehäuse ein erster Anschlag und ein zweiter Anschlag ausgebildet sind, gegen die in einer ersten Endstellung des Klappenkörpers jeweils eine Klappenhälfte des Klappenkörpers anliegt und ein dritter Anschlag und ein vierter Anschlag ausgebildet sind, gegen die in einer zweiten Endstellung des Klappenkörpers jeweils eine Klappenhälfte des Klappenkörpers anliegt.

Derartige Klappenvorrichtungen werden insbesondere als 3/2-Wege-Bypassventile im Abgasbereich von Fahrzeugen verwendet. Hier dienen die Klappenvorrichtungen dazu beispielsweise in einem Abgasrückführkanal den Abgasstrom entweder zu einem Abgaskühler oder um den Abgaskühler herum zu leiten, um Schadstoffemissionen durch schnellere Aufheizung während der Kaltstartphase zu reduzieren. Auch können solche Klappen zur Umgehung der Turbine von Turboladern eingesetzt werden.

Eine derartige Bypassklappe ist beispielsweise aus der WO 2017/174121 A1 bekannt. Der auf der Welle angeordnete Klappenkörper kann mit der Welle in zwei Endstellungen gedreht werden, wobei in den beiden Endstellungen jeweils eine fluidische Verbindung zwischen dem Einlass und einem der Auslässe geschaffen wird, während der Durchlass zum jeweiligen anderen Auslass durch den Klappenkörper verschlossen wird. Hierzu liegt der Klappenkörper gegen die Kanalwände des Gehäuses an. Es hat sich jedoch gezeigt, dass bei dieser Ausbildung keine ausreichende Dichtigkeit für alle Anwendungen in den Endstellungen des Klappenkörpers erreicht wird.

Des Weiteren ist aus der DE 10 2011 106 744 B3 eine Abgasklappe bekannt, bei der im Kanal für beide Klappenhälften jeweils ein sich über den halben Klappenumfang erstreckender Ventilsitz ausgebildet ist, gegen den ein Federblech, welches zwischen zwei Stützscheiben des Klappenkörpers eingeklemmt ist, in der den Kanal verschließenden Stellung anliegt, so dass ein dichter Verschluss des Kanals erreicht wird. Mit dieser Klappe kann jedoch lediglich ein Kanal freigegeben oder verschlossen werden.

Des Weiteren ist aus der EP 1 262 646 A2 ein Klappenventil bekannt, welches mit einem Klappengehäuse zwischen zwei Schalen eines Anschlussgehäuses einsetzt wird, und bei dem am Gehäuse Ventilsitzflächen ausgebildet sind.

Des Weiteren ist aus der DE 37 00 219 A1 eine elektromagnetisch betätigbare Klappenvorrichtung in Form eines 3/2-Wegeventils offenbart, bei dem für den Klappenkörper in beiden Endstellungen der Klappe eine flächige umlaufende Anlage des Klappenkörpers am Ventilsitz erfolgt.

Weitere Vorrichtungen sind aus DE 10 2008 048912 A1, DE 10 2013 111215 A1, DE 10 2005 012842 A1, EP 1 443 191 A2, US 2001/047834 A1 und DE 77 16 337 U1 bekannt.

Es stellt sich daher die Aufgabe, eine Klappenvorrichtung für eine Verbrennungskraftmaschine zu schaffen, welche als 3/2-Wegeventil ausgeführt ist, welches in beiden Endstellungen des Klappenkörpers einen dichten Verschluss gewährleistet und möglichst unabhängig vom Anschlussgehäuse eingebaut werden kann.

Diese Aufgabe wird durch eine Klappenvorrichtung für eine Verbrennungskraftmaschine mit den Merkmalen des Hauptanspruchs 1 gelöst.

Dadurch, dass die Klappenhälften in ihren beiden Endstellungen jeweils mit ihrem gesamten Außenumfangsbereich senkrecht auf ventilsitzflächen aufliegen, die an den Anschlägen ausgebildet sind, wobei sich die Klappenhälften in den Endstellungen im Wesentlichen parallel zu den Ventilsitzflächen erstrecken, wobei der Klappenkörper eine erste formsteife Klappenplatte und eine zweite formsteife Klappenplatte aufweist, zwischen denen ein flexibles Dichtelement eingeklemmt ist, welches über den Umfang der beiden Klappenplatten radial vorsteht, so dass eine Außenfläche des Dichtelements den Außenumfangsbereich des Kappenkörpers ausbildet, der in den beiden Endstellungen gegen die Ventilsitzflächen anliegt und wobei das Klappengehäuse als zylindrisches Steckgehäuse ausgebildet ist, das mit dem Klappenkörper und der Welle in Axialrichtung der Welle und des zylindrischen Steckgehäuses in eine Aufnahmeöffnung eines Anschlussgehäuses gesteckt ist, so dass ein Einlasskanal des Anschlussgehäuses in dem Einlass des Klappengehäuses mündet und zwei Auslasskanäle des Anschlussgehäuses sich von den Auslässen des Klappengehäuses erstrecken, wird sichergestellt, dass Leckagen in beiden Endstellungen zwischen dem Klappenkörper und den Ventilsitzflächen in beiden Endstellungen minimiert werden. Die Auflage erfolgt dabei bis an den Wellendurchgang. Die hohe Dichtigkeit wird durch den flächigen, zum Ventilsitz axialen Anschlag sichergestellt, der ähnlich funktioniert wie das Schließen einer Tür an einem Türrahmen. Im Vergleich zu den bekannten, rein linienförmigen Anschlägen wird der Strömungswiderstand somit deutlich erhöht. Unter Außenumfangsbereich wird der Bereich jeder Klappenhälfte verstanden, der nicht unmittelbar zu der gegenüberliegenden Klappenhälfte gerichtet ist, so dass die beiden Klappenhälften gemeinsam einen geschlossenen aufliegenden Außenumfangsbereich bilden. Die Klappenvorrichtung ist somit als Steckventil ausgebildet, welches in beliebige Anschlussgehäuse eingesetzt werden kann. Es beinhaltet dennoch sowohl die notwendigen Klappenlager als auch die Ventilsitzflächen und gegebenenfalls den Aktor. Diese Bauteile können komplett vormontiert in ein entsprechendes Gehäuse eingesetzt werden. Hierdurch kann ebenfalls die Dichtigkeit im geschlossenen Zustand erhöht werden, da ein Einbau des Klappenkörpers in einem großen und schlecht zugänglichen Gehäuse entfällt. Ein solches gestecktes Gehäuse kann entsprechend mit deutlich kleineren Toleranzen gefertigt werden, was ebenfalls die erreichbaren Dichtigkeiten erhöht. Durch das flexible Dichtelement können geringe Unebenheiten durch Verformung ausgeglichen werden. Des Weiteren kann durch gezieltes Überdrehen ein erhöhter Schließdruck und Toleranzausgleich aufgebracht werden, ohne die Stabilität des Klappenkörpers zu gefährden. So kann die Dichtigkeit zusätzlich erhöht werden.

Vorzugsweise liegt in den Endstellungen der durch die über die Klappenplatten radial vorstehenden Außenflächen des Dichtelementes gebildete Außenumfangsbereich der Klappenhälften flächig auf der jeweils zugehörigen, korrespondierend zum Außenumfangsbereich des Klappenkörpers geformten Ventilsitzfläche auf. Durch diese größere Auflagefläche erhöht sich der Strömungswiderstand, wodurch die Dichtigkeit des Verschlusses erhöht wird.

In einer bevorzugten Ausbildung sind der Einlass und die beiden Auslässe in Drehrichtung versetzt zueinander ausgebildet, wobei der Einlass zwischen den beiden Auslässen angeordnet ist. Hierdurch wird ein einfaches Umschalten zwischen den beiden Gaswegen durch einen sehr kleinen zu durchfahrenden Drehwinkel ermöglicht.

In einer weiterführenden Ausführungsform ist das flexible Dichtelement eine Federblechplatte, die einfach herzustellen ist und eine hohe Beständigkeit bei thermischer, chemischer und mechanischer Belastung aufweist.

Vorzugsweise sind die beiden Klappenplatten und das flexible Dichtelement mittels einer Schraubverbindung aneinander befestigt. Eine derartige Befestigung ist einfach herzustellen und ermöglicht auch einen Austausch einzelner Klappenteile.

Eine einfache Herstellung mit geringen Strömungswiderstanden aufgrund vorhandener Umlenkungen wird erreicht, wenn der erste Auslass zum Einlass um 90° in Drehrichtung versetzt angeordnet ist und der Einlass um 90° versetzt zum zweiten Auslass angeordnet ist.

Vorzugsweise erstrecken sich der Einlass und die Auslässe jeweils über 90° Drehwinkel des Klappenkörpers. Auf diese Weise können bei einem zylindrischen Steckventil etwa gleiche Kanaldurchmesser erhalten bleiben, wodurch der Strömungswiderstand sinkt.

Dabei ist das Klappengehäuse radial gegenüberliegend zum Einlass vorzugsweise geschlossen ausgebildet, wodurch die Steifigkeit des Gehäuses erhöht wird und Umströmungen der Klappe beim Schalten weitestgehend verhindert werden.

Vorzugsweise weist das Klappengehäuse einen Boden und ein Deckelteil auf, an denen Stege ausgebildet sind, die mit vier Streben, die den Boden mit dem Deckelteil verbinden, die Anschläge bilden. Ein derartiges Klappengehäuse ist besonders einfach und kostengünstig herstellbar und weist ein geringes Gewicht auf.

Es wird somit eine Klappenvorrichtung für eine Verbrennungskraftmaschine geschaffen, die als 3/2-Wegeventil in beiden Endlagen den jeweiligen Auslass sehr dicht verschließt. Gleichzeitig kann diese Klappenvorrichtung als zylindrisches Steckventil ausgeführt werden, welches an jedes Anschlussgehäuse anpassbar ist. Auch die Strömungswiderstände im Klappengehäuse werden gering gehalten.

Ein Ausführungsbeispiel einer erfindungsgemäßen Klappenvorrichtung für eine Verbrennungskraftmaschine ist in den Figuren dargestellt und wird nachfolgend beschrieben.

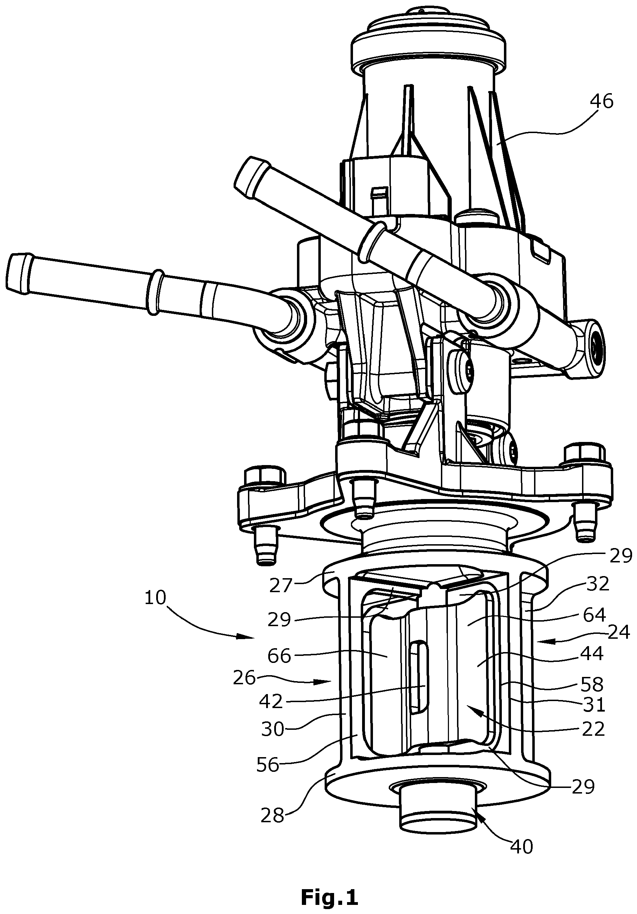

Figur 1 zeigt eine perspektivische Ansicht einer erfindungsgemäßen Klappenvorrichtung.

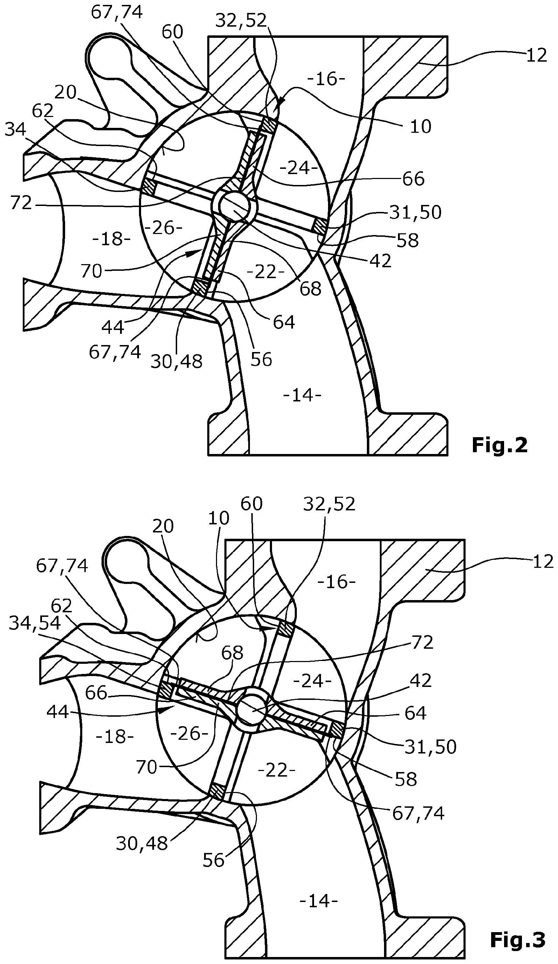

Figur 2 zeigt die erfindungsgemäße Klappenvorrichtung in Achsrichtung der Welle in geschnittener Darstellung in einer ersten Endstellung.

Figur 3 zeigt die erfindungsgemäße Klappenvorrichtung in Achsrichtung der Welle in geschnittener Darstellung in einer zweiten Endstellung.

Die erfindungsgemäße Klappenvorrichtung besteht aus einem im vorliegenden Ausführungsbeispiel zylindrischen Klappengehäuse 10, welches als in ein Anschlussgehäuse 12 in Achsrichtung einschiebbares Steckgehäuse ausgebildet ist.

Am Anschlussgehäuse 12 sind ein zentraler Einlasskanal 14 sowie ein erster Auslasskanal 16 und ein zweiter Auslasskanal 18 ausgebildet, die sich vom Einlasskanal 14 aus betrachtet von einer Aufnahmeöffnung 20 für das Klappengehäuse 10 gegenüberliegend zueinander und in Drehrichtung um jeweils 90° zu beiden Seiten versetzt zum Einlasskanal 14 aus in das weiterführende Anschlussgehäuse 12 erstrecken.

Das Klappengehäuse 10 weist einen zum Einlasskanal 14 korrespondierenden Einlass 22, in welchen der Einlasskanal 14 mündet sowie einen ersten Auslass 24, der in den ersten Auslasskanal 16 mündet und einen zweiten Auslass 26, der in den zweiten Auslasskanal 18 mündet, auf. Hierzu besteht das Klappengehäuse 10 aus einem Deckelteil 27 und einem Boden 28, die kreisförmig ausgebildet sind und zwischen denen sich vier Streben 30, 31, 32, 34 erstrecken, die sich vom Boden 28 zum Deckelteil 27 erstrecken. An diese Streben 30, 31, 32, 34 schließen sich Stege 29 an, die sich entlang des Bodens 28 und des Deckelteils 27 radial nach innen erstrecken.

Zentral im Deckelteil 27 und im Boden 28 sind Aufnahmeöffnungen für Lager 40 ausgebildet, die eine Welle 42 drehbar lagern, auf der ein Klappenkörper 44 befestigt ist, der mit der Welle 42 im Klappengehäuse 10 mittels eines Aktors 46 zwischen einer ersten Endstellung und einer zweiten Endstellung gedreht werden kann. Diese zwei Endstellungen werden durch die Anlage des Klappenkörpers 44 gegen Anschläge 48, 50, 52, 54 festgelegt die an den radialen Innenseiten der Streben 30, 31, 32, 34, sowie an den Stegen 29 ausgebildet sind. Hierzu weisen die Anschläge 48, 50, 52, 54 jeweils eine Ventilsitzfläche 56, 58, 60, 62 auf, wobei die beiden Ventilsitzflächen 56, 58, 60, 62 in Umfangsrichtung betrachtet von den Auslässen 24, 26 wegweisen, so dass die jeweils gleichzeitig wirkenden Ventilsitzflächen 56, 58, 60, 62 um 180° versetzt zueinander ausgebildet sind und jede Ventilsitzfläche 56, 58, 60, 62 zur nächsten Ventilsitzfläche 58, 60, 62, 56 um 90° versetzt angeordnet ist.

Der Klappenkörper 44 wird durch die Welle 42 in zwei gleiche Klappenhälften 64, 66 geteilt, wobei jede Klappenhälfte 64, 66 mit den beiden Ventilsitzflächen 56, 58, 60, 62 zusammenwirkt, zwischen denen sie gedreht wird, indem die Klappenhälften 64, 66 mit ihrem Außenumfangsbereich 67 senkrecht auf den Ventilsitzflächen 56, 58, 60, 62 aufliegen. Entsprechend korrespondiert auch die Klappenhälfte 64, 66 in ihrer Form zu den Ventilsitzflächen 56, 58, 60, 62, deren Innenumfang lediglich geringfügig kleiner gewählt ist als der Außenumfang des Klappenkörpers 44. In den Endstellungen erstreckt sich entsprechend der Klappenkörper 44 parallel zu den Ventilsitzflächen 56, 58, 60, 62. Die Klappenhälften 64, 66 sind etwa rechteckig mit abgerundeten Ecken ausgebildet und weisen einen schichtartigen Aufbau auf, der aus einer ersten formsteifen Klappenplatte 68 und einer zweiten formsteifen Klappenplatte 70 besteht, zwischen denen jeweils ein als Federblechplatte ausgebildetes flexibles Dichtelement 72 angeordnet ist, welches radial gleichmäßig über den Umfangsrand der Klappenplatten 68, 70 vorsteht, so dass zwei flexible U-förmige Außenflächen 74 den Klappenkörper 44 begrenzen, die den Außenumfangsbereich 67 der Klappenhälften 64, 66 bilden. Die beiden Klappenplatten 68, 70 können unter Zwischenlage des Dichtelementes 72 durch Schrauben oder Nieten oder auch durch Schweißen miteinander verbunden werden.

Die zwei flexiblen U-förmigen Außenflächen 74 liegen in den Endstellungen des Klappenkörpers 44 auf den Ventilsitzflächen 56, 58, 60, 62 senkrecht auf. Im Einzelnen bedeutet dies, dass in einer ersten Endstellung, in der eine fluidische Verbindung des Einlasskanals 14 mit dem ersten Auslasskanal 16 hergestellt wird, die erste Klappenhälfte 64 mit ihrer flexiblen Außenfläche 74 gegen die erste Ventilsitzfläche 56 am ersten Anschlag 48 anliegt und die zweite Klappenhälfte 66 mit ihrer flexiblen Außenfläche 74 gegen die zweite Ventilsitzfläche 60 am zweiten Anschlag 52 anliegt. Entsprechend kann ein Abgasstrom vom Einlasskanal 14 zum Einlass 22 und vorbei an dem Klappenkörper 44 zum ersten Auslasskanal 16 strömen, während der zweite Auslasskanal 18 durch den Klappenkörper 44 verdeckt wird, wobei eine hohe Dichtigkeit durch die umliegende und senkrechte Auflage der beiden Außenflächen 74 des flexiblen Dichtelementes 72 auf den Ventilsitzflächen 56, 60 erreicht wird.

Bei Betätigung der Welle 42 wird der Klappenkörper 44 von den Ventilsitzflächen 56, 60 entgegen dem Uhrzeigersinn weggedreht gedreht, bis nach etwa 90° die jeweils gegenüberliegende Seite der Außenflächen 74 senkrecht auf den Ventilsitzflächen 58, 62 aufliegt, wobei die Außenfläche 74 der ersten Klappenhälfte 64 gegen die Ventilsitzfläche 58 am dritten Anschlag 50 anliegt und die Außenfläche 74 der zweiten Klappenhälfte 66 gegen die Ventilsitzfläche 62 am vierten Anschlag 54 anliegt. Entsprechend gelangt der Abgasstrom in dieser zweiten Endstellung vom Einlasskanal 14 über den Einlass 22 der Klappenvorrichtung entlang der Oberfläche des Klappenkörpers 44 zum zweiten Auslass 26 und in den zweiten Auslasskanal 18.

In beiden Endstellungen des Klappenkörpers wird ein sehr dichter Verschluss des nicht geöffneten Auslasskanals erreicht, da das flexible Dichtelement senkrecht mit einer relativ großen Auflagefläche auf den glatten Ventilsitzflächen aufliegt, so dass ein hoher Strömungswiderstand erreicht wird und die Leckagen minimiert werden. Des Weiteren besteht eine allmähliche Umlenkung der Strömung mit geringen Strömungswiderständen. Durch die Ausführung als Steckventil müssen die Ventilsitzfläche nicht am Anschlussgehäuse ausgebildet werden, welches für eine nachträgliche Bearbeitung nur sehr schwer zugänglich wäre, während durch die Ausbildung der Ventilsitzfläche am einsteckbaren Klappengehäuse die Ventilsitzflächen genau zum Klappenkörper angepasst werden können. Auch dies erhöht die Dichtigkeit.

Es sollte deutlich sein, dass die Erfindung nicht auf das beschriebene Ausführungsbeispiel beschränkt ist, sondern verschiedene konstruktive Änderungen möglich sind. So kann beispielsweise der Klappenkörper und die Ventilsitzflächen auch rund oder oval ausgeführt werden, wobei die Form der Streben und Stege entsprechend der Klappenform anzupassen wäre, um einen umlaufenden Ventilsitz auszubilden. Auch kann ein ringförmiges oder U-förmiges Dichtelement zwischen die Klappenplatten geklemmt werden.

## Patentansprüche

1. Klappenvorrichtung für eine Verbrennungskraftmaschine mit einem Klappengehäuse (10), in dem ein Einlass (22) und zwei Auslässe (24, 26) ausgebildet sind,
und einem Klappenkörper (44), der zwei Klappenhälften (64, 66) aufweist und der auf einer Welle (42) angeordnet ist, die drehbar im Klappengehäuse (10) gelagert ist und von der aus sich beidseits die beiden Klappenhälften (64, 66) erstrecken,
wobei im Klappengehäuse (10) ein erster Anschlag (48) und ein zweiter Anschlag (52) ausgebildet sind, gegen die in einer ersten Endstellung des Klappenkörpers (44) jeweils eine Klappenhälfte (64; 66) des Klappenkörpers (44) anliegt und ein dritter Anschlag (50) und ein vierter Anschlag (54) ausgebildet sind, gegen die in einer zweiten Endstellung des Klappenkörpers (44) jeweils eine Klappenhälfte (64; 66) des Klappenkörpers (44) anliegt,
wobei die Klappenhälften (64, 66) in ihren beiden Endstellungen jeweils mit ihrem gesamten Außenumfangsbereich (67) senkrecht auf Ventilsitzflächen (56, 58, 60, 62) aufliegen, die an den Anschlägen (48, 50, 52, 54) ausgebildet sind, wobei sich die Klappenhälften (64, 66) in den Endstellungen im Wesentlichen parallel zu den Ventilsitzflächen (56, 58, 60, 62) erstrecken,
**dadurch gekennzeichnet, dass**
der Klappenkörper (44) eine erste formsteife Klappenplatte (68) und eine zweite formsteife Klappenplatte (70) aufweist, zwischen denen ein flexibles Dichtelement (72) eingeklemmt ist, welches über den Umfang der beiden Klappenplatten (68, 70) radial vorsteht, so dass eine Außenfläche (74) des Dichtelements (72) den Außenumfangsbereich (67) des Kappenkörpers (44) ausbildet, der in den beiden Endstellungen gegen die Ventilsitzflächen (56, 58, 60, 62) anliegt und dadurch, dass das Klappengehäuse (10) als zylindrisches Steckgehäuse ausgebildet ist, das mit dem Klappenkörper (44) und der Welle (42) in Axialrichtung der Welle (42) und des zylindrischen Steckgehäuses in eine Aufnahmeöffnung (20) eines Anschlussgehäuses (12) gesteckt ist, so dass ein Einlasskanal (14) des Anschlussgehäuses (12) in dem Einlass (22) des Klappengehäuses (10) mündet und zwei Auslasskanäle (16, 18) des Anschlussgehäuses (12) sich von den Auslässen (24, 26) des Klappengehäuses (10) erstrecken.

2. Klappenvorrichtung für eine Verbrennungskraftmaschine nach Anspruch 1,
**dadurch gekennzeichnet, dass**
in den Endstellungen der durch die über die Klappenplatten (68, 70) radial vorstehenden Außenflächen (74) des Dichtelementes (72) gebildete Außenumfangsbereich (67) der Klappenhälften (64, 66) flächig auf der jeweils zugehörigen, korrespondierend zum Außenumfangsbereich (67) des Klappenkörpers (44) geformten Ventilsitzfläche (56, 58, 60, 62) aufliegt.

3. Klappenvorrichtung für eine Verbrennungskraftmaschine nach einem der Ansprüche 1 oder 2,
**dadurch gekennzeichnet, dass**
der Einlass (22) und die beiden Auslässe (24, 26) in Drehrichtung versetzt zueinander ausgebildet sind, wobei der Einlass (22) zwischen den beiden Auslässen (24, 26) angeordnet ist.

4. Klappenvorrichtung für eine Verbrennungskraftmaschine nach einem der vorhergehenden Ansprüche,
**dadurch gekennzeichnet, dass**
das flexible Dichtelement (72) eine Federblechplatte ist.

5. Klappenvorrichtung für eine Verbrennungskraftmaschine nach einem der vorhergehenden Ansprüche,
**dadurch gekennzeichnet, dass**
die beiden Klappenplatten (68, 70) und das flexible Dichtelement (72) mittels einer Schraubverbindung aneinander befestigt sind.

6. Klappenvorrichtung für eine Verbrennungskraftmaschine nach einem der vorhergehenden Ansprüche,
**dadurch gekennzeichnet, dass**
der erste Auslass (24) zum Einlass (22) um 90° in Drehrichtung versetzt angeordnet ist und der Einlass (22) um 90° versetzt zum zweiten Auslass (26) angeordnet ist.

7. Klappenvorrichtung für eine Verbrennungskraftmaschine nach Anspruch 6,
**dadurch gekennzeichnet, dass**
der Einlass (22) und die Auslässe (24, 26) sich jeweils über 90° Drehwinkel des Klappenkörpers (44) erstrecken.

8. Klappenvorrichtung für eine Verbrennungskraftmaschine nach einem der vorhergehenden Ansprüche,
**dadurch gekennzeichnet, dass**
das Klappengehäuse (10) radial gegenüberliegend zum Einlass (22) geschlossen ausgebildet ist.

9. Klappenvorrichtung für eine Verbrennungskraftmaschine nach einem der vorhergehenden Ansprüche,
**dadurch gekennzeichnet, dass**
das Klappengehäuse (10) einen Boden (28) und ein Deckelteil (27) aufweist, an denen Stege (29) ausgebildet sind, die mit vier Streben (30, 31, 32, 34), die den Boden (28) mit dem Deckelteil (27) verbinden, die Anschläge (48, 50, 52, 54) bilden.

## Claims

1. Flap device for an internal combustion engine having a flap housing (10) in which an inlet (22) and two outlets (24, 26) are formed,
and a flap body (44) which has two flap halves (64, 66) and which is arranged on a shaft (42) which is rotatably mounted in the flap housing (10) and from which the two flap halves (64, 66) extend on both sides, wherein a first stop (48) and a second stop (52) are formed in the flap housing (10), against each of which a flap half (64; 66) of the flap body (44) rests in a first end position of the flap body (44), and a third stop (50) and a fourth stop (54) are formed, against each of which a flap half (64; 66) of the flap body (44) rests in a second end position of the flap body (44), wherein the flap halves (64, 66) in their two end positions resting in each case with their entire outer circumferential region (67) perpendicularly on valve seat surfaces (56, 58, 60, 62) which are formed on the stops (48, 50, 52, 54), the flap halves (64, 66) in the end positions extending essentially parallel to the valve seat surfaces (56, 58, 60, 62)
**characterized in that**
the flap body (44) has a first inflexible flap plate (68) and a second inflexible flap plate (70), between which a flexible sealing element (72) is clamped, which projects radially over the circumference of the two flap plates (68, 70), so that an outer surface (74) of the sealing element (72) forms the outer circumferential region (67) of the flap body (44), which in the two end positions rests against the valve seat surfaces (56, 58, 60, 62) and that the flap housing (10) is formed as a cylindrical plug-in housing which is plugged into a receiving opening (20) of a connection housing (12) with the flap body (44) and the shaft (42) in the axial direction of the shaft (42) and the cylindrical plug-in housing so that an inlet duct (14) of the connection housing (12) opens into the inlet (22) of the flap housing (10) and two outlet ducts (16, 18) of the connection housing (12) extend from the outlets (24, 26) of the flap housing (10).

2. Flap device for an internal combustion engine according to claim 1, **characterized in that**
in the end positions, the outer circumferential region (67) of the flap halves (64, 66) formed by the outer surfaces (74) of the sealing element (72) projecting radially beyond the flap plates (68, 70) rests flat on the respectively associated valve seat surface (56, 58, 60, 62) which corresponds to the outer circumferential region (67) of the flap body (44).

3. Flap device for an internal combustion engine according to one of claims 1 or 2,
**characterized in that**
the inlet (22) and the two outlets (24, 26) are formed offset from each other in the direction of rotation, the inlet (22) being arranged between the two outlets (24, 26).

4. Flap device for an internal combustion engine according to one of the preceding claims,
**characterized in that**
the flexible sealing element (72) is a spring plate.

5. Flap device for an internal combustion engine according to one of the preceding claims,
**characterized in that**
the two flap plates (68, 70) and the flexible sealing element (72) are fastened to each other by means of a screw connection.

6. Flap device for an internal combustion engine according to one of the preceding claims,
**characterized in that**
the first outlet (24) is arranged offset from the inlet (22) by 90° in the direction of rotation, and the inlet (22) is arranged offset from the second outlet (26) by 90°.

7. Flap device for an internal combustion engine according to claim 6,
**characterized in that**
the inlet (22) and the outlets (24, 26) each extend through 90° angles of rotation of the flap body (44).

8. Flap device for an internal combustion engine according to any of the preceding claims,
**characterized in that**
the flap housing (10) is designed to be closed radially opposite the inlet (22).

9. Flap device for an internal combustion engine according to one of the preceding claims,
**characterized in that**
the flap housing (10) has a base (28) and a cover part (27), on which webs (29) are formed which, together with four struts (30, 31, 32, 34) connecting the base (28) to the cover part (27), form the stops (48, 50, 52, 54).

## Revendications

1. Dispositif de clapet pour un moteur à combustion interne comprenant un boîtier de clapet (10) dans lequel sont formées une entrée (22) et deux sorties (24, 26),
et un corps de clapet (44) qui présente deux moitiés de clapet (64, 66) et qui est disposé sur un arbre (42) monté rotatif dans le boîtier de clapet (10) et duquel partent les deux moitiés de clapet (64, 66) des deux côtés, dans lequel une première butée (48) et une deuxième butée (52) sont formées dans le boîtier de clapet (10), contre chacune desquelles une moitié de clapet (64 ; 66) du corps de clapet (44) repose dans une première position d'extrémité du corps de clapet (44), et une troisième butée (50) et une quatrième butée (54) sont formées, contre chacune desquelles une demi clapet (64 ; 66) du corps de clapet (44) repose dans une deuxième position d'extrémité du corps de clapet (44), les moitiés de clapet (64, 66) reposant dans leurs deux positions d'extrémité respectivement avec toute leur zone périphérique extérieure (67) perpendiculairement sur des surfaces de siège de soupape (56, 58, 60, 62) qui sont formées sur les butées (48, 50, 52, 54), les moitiés de clapet (64, 66) s'étendant dans les positions d'extrémité essentiellement parallèlement aux surfaces de siège de soupape (56, 58, 60, 62)
**caractérisé en ce que**
le corps de clapet (44) présente une première plaque de clapet inflexible (68) et une deuxième plaque de clapet inflexible (70), entre lesquelles est serré un élément d'étanchéité flexible (72) qui fait saillie radialement sur la circonférence des deux plaques de clapet (68, 70), de sorte qu'une surface extérieure (74) de l'élément d'étanchéité (72) forme la région circonférentielle extérieure (67) du corps de clapet (44) qui, dans les deux positions d'extrémité, repose contre les surfaces de siège de soupape (56, 58, 60, 62) et **en ce que** le boîtier de clapet (10) est réalisé sous la forme d'un boîtier cylindrique enfichable qui, avec le corps de clapet (44) et l'arbre (42), est enfiché dans une ouverture de réception (20) d'un boîtier de raccordement (12) dans la direction axiale de l'arbre (42) et du boîtier cylindrique enfichable, de sorte qu'un canal d'entrée (14) du boîtier de raccordement (12) débouche dans l'entrée (22) du boîtier de clapet (10) et que deux canaux de sortie (16, 18) du boîtier de raccordement (12) partent des sorties (24, 26) du boîtier de clapet (10).

2. Dispositif de clapet pour un moteur à combustion interne selon la revendication 1,
**caractérisé en ce que**
dans les positions d'extrémité, la zone périphérique extérieure (67) des demi-clapets (64, 66) formée par les surfaces extérieures (74) de l'élément d'étanchéité (72) dépassant radialement des plaques de clapet (68, 70) repose à plat sur la surface de siège de soupape (56, 58, 60, 62) respectivement associée, qui correspond à la zone périphérique extérieure (67) du corps de clapet (44).

3. Dispositif de clapet pour un moteur à combustion interne selon l'une des revendications 1 ou 2,
**caractérisé en ce que**
l'entrée (22) et les deux sorties (24, 26) sont formées de manière décalée l'une par rapport à l'autre dans le sens de rotation, l'entrée (22) étant disposée entre les deux sorties (24, 26).

4. Dispositif de clapet pour moteur à combustion interne selon l'une des revendications précédentes,
**caractérisé en ce que**
l'élément d'étanchéité souple (72) est une lamelle élastique.

5. Dispositif de clapet pour moteur à combustion interne selon l'une des revendications précédentes,
**caractérisé en ce que**
les deux clapets (68, 70) et l'élément d'étanchéité souple (72) sont fixés l'un à l'autre au moyen d'une liaison par vis.

6. Dispositif de clapet pour moteur à combustion interne selon l'une des revendications précédentes,
**caractérisé en ce que**
la première sortie (24) est disposée décalée de 90° par rapport à l'entrée (22) dans le sens de rotation, et l'entrée (22) est disposée décalée de 90° par rapport à la deuxième sortie (26).

7. Dispositif de clapet pour un moteur à combustion interne selon la revendication 6,
**caractérisé en ce que**
l'entrée (22) et les sorties (24, 26) s'étendent chacune sur des angles de rotation de 90° du corps de clapet (44).

8. Dispositif de clapet pour moteur à combustion interne selon l'une quelconque des revendications précédentes,
**caractérisé en ce que**
le corps de clapet (10) est conçu pour être fermé radialement à l'opposé de l'entrée (22).

9. Dispositif de clapet pour moteur à combustion interne selon l'une des revendications précédentes,
**caractérisé en ce que**
le carter de clapet (10) présente un fond (28) et une partie de couvercle (27) sur lesquels sont formées des nervures (29) qui, avec quatre entretoises (30, 31, 32, 34) reliant le fond (28) à la partie de couvercle (27), forment les butées (48, 50, 52, 54).
